(19) Europäisches Patentamt
European Patent Office
Office européen des brevets

(11) **EP 1 930 630 A1**

(12) **EUROPEAN PATENT APPLICATION**

(43) Date of publication:
**11.06.2008 Bulletin 2008/24**

(51) Int Cl.:
**F16H 55/14** *(2006.01)*

(21) Application number: **07122566.8**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.12.2006 US 868799 P**

(71) Applicant: **BRP-Rotax GmbH & Co. KG**
**4623 Gunskirchen (AT)**

(72) Inventors:
 • **Gruber, Stefan**
  **4661 Roitham (AT)**
 • **Berger, Christian**
  **4625 Offenhausen (AT)**

 • **Korenjak, Norbert**
  **4651 Stadl-Paura (AT)**
 • **Schrenk, Wolfgang**
  **4210 Gallneukirchen (AT)**
 • **Weinzierl, Thomas**
  **4070 Fraham (AT)**
 • **Lagler, Karl**
  **4020 Linz (AT)**
 • **Glinsner, Karl**
  **4600 Wels (AT)**
 • **Wickenhauser, Johann**
  **4625 Offenhausen (AT)**

(74) Representative: **Gabriel, Franck**
**PROXIP**
**36 rue des Etats Généraux**
**78000 Versailles (FR)**

(54) **Power transmission wheel with torsional dampers**

(57)    A power transmission wheel having a hub (102) and a rim (104) is disclosed. The hub has a central annular portion (108) for operatively engaging a power transmitting shaft. The rim has an inner annular portion (114) and an outer annular portion (116) for operatively engaging a flexible power transmitting element. The central annular portion is disposed inside the inner annular portion with a rolling-element bearing therebetween. At least one hub blade (124) is disposed radially between the inner and outer annular portions. At least one rim blade (126) extends radially from one of the inner and outer annular portions towards the other of the inner and outer annular portions. The power transmission wheel has at least two elastomeric dampers (106). Each damper is interposed between one of the at least one hub blade and one of the at least one rim blade. An engine and vehicles using the power transmission wheels are also disclosed.

FIG. 4

EP 1 930 630 A1

## Description

CROSS-REFERENCE

The present application claims priority to United States Provisional Patent Application No. 60/868,799 filed on December 6, 2006, entitled "Power Transmission Wheel with Torsional Dampers", the entirety of which is incorporated herein by reference.

FIELD OF THE INVENTION

The present invention relates to power transmission wheels with torsional dampers.

BACKGROUND OF THE INVENTION

Many motorcycles and recreational vehicles, such as all-terrain vehicles (ATV) and snowmobiles, transmit the power from their engine to their wheel(s) via a flexible power transmitting element. This is achieved using a first power transmission wheel on the output shaft of the engine and second power transmission wheel in operative connection with the wheel(s) onto which the flexible power transmitting element is engaged. When the flexible power transmitting element used is a notched belt, the power transmission wheels are in the form of notched belt pulleys. When the flexible power transmitting element used is a chain, the power transmission wheels are in the form of sprockets.

As would be understood by those skilled in the art, it is important that the transfer of torque from the engine to the wheel(s) of the vehicle be as uniform as possible. The torque produced by an internal combustion engine is variable, having torque peaks at the combustion events and torque lows in between combustion events.

For high performance motorcycles and recreational vehicles it is desirable that the vehicle be lightweight and that the engine also be lightweight and responsive. However, this can only be achieved up to a certain degree. The use of heavy components in the drive train of the vehicle can result in tangible load variations. On the other hand, reducing the weight of the crank drive can result in increased vibrations.

Therefore, there is a need for a device which would help to maintain the torque transfer from the engine to the wheel(s) of a vehicle more uniform during at least some operating conditions.

SUMMARY OF THE INVENTION

It is an object of the present invention to ameliorate at least some of the inconveniences present in the prior art.

It is also an object of the present invention to provide a power transmission wheel having a hub, a rim, and elastomeric dampers.

It is also an object of the present invention to provide an internal combustion engine having the above-mentioned power transmission wheel disposed on the output shaft of the engine.

It is also an object of the present invention to provide a vehicle having the above-mentioned engine.

In one aspect, the invention provides a power transmission wheel having a hub and a rim. The hub has a central annular portion. The central annular portion has an inner surface and an outer surface. The inner surface is configured for operatively engaging a power transmitting shaft. The rim has an inner annular portion and an outer annular portion. The central annular portion of the hub is disposed inside the inner annular portion of the rim. The outer annular portion of the rim has an outer surface configured for operatively engaging a flexible power transmitting element. At least one hub blade extends axially from the hub towards the rim and is disposed radially between the inner and outer annular portions of the rim. At least one rim blade extends axially from the rim towards the hub and extends radially from one of the inner and outer annular portions of the rim towards the other of the inner and outer annular portions. The power transmission wheel has at least two elastomeric dampers. Each damper is interposed between one of the at least one hub blade and one of the at least one rim blade. A rolling-element bearing is disposed between the outer surface of the central annular portion of the hub and an inner surface of the inner annular portion of the rim.

In a further aspect, the at least one hub blade is four hub blades, the at least one rim blade is four rim blades, and the at least two elastomeric dampers are eight elastomeric dampers.

In an additional aspect, the four hub blades are equally spaced around a circumference of the hub. The four rim blades are equally spaced around a circumference of the rim. Eight arcs are defined between the four hub blades and the four rim blades along the outer surface of the outer annular portion of the rim. Four of the eight arcs have a first arc length. Four of the eight arcs have a second arc length. The first arc length is greater than the second arc length. The hub and the rim are disposed such that the arcs having the first arc length and the arcs having the second arc length alternate along a circumference of the outer surface of the outer annular portion. Four of the eight elastomeric dampers have a first width. Four of the elastomeric dampers have a second width. The first width being greater than the second width. Each of the four elastomeric dampers having the first width is interposed between one of the hub blades and one of the rim blades which define therebetween one of the four arcs having the first arc length. Each of the four elastomeric dampers having the second width is interposed between one of the hub blades and one of the rim blades which define therebetween one of the four arcs having the second arc length.

In a further aspect, the elastomeric dampers having the first width have a greater volume than the elastomeric dampers having the second width.

In an additional aspect, the rolling-element bearing is a needle bearing.

In a further aspect, the rolling element bearing is at least partially axially aligned with the outer surface of the outer annular portion of the rim.

In an additional aspect, the outer surface of the rim is configured for operatively engaging a flexible power transmitting element by being toothed for operatively engaging one of a notched belt and a chain.

In a further aspect, the at least one rim blade extends from the inner annular portion of the rim to the outer annular portion of the rim.

In an additional aspect, a bolt is provided for fastening the power transmission wheel to an end of an output shaft of an internal combustion engine, and a ring is disposed between the bolt and the rim. The output shaft has a shoulder. The power transmission wheel is disposed between the shoulder and the ring such that the power transmission wheel is retained on the output shaft.

In a further aspect, an amount of friction between the ring and the rim can be adjusted by tightening or loosening the bolt. The relative movement of the rim with respect to the hub can be adjusted by the amount of friction.

In a further aspect, the at least two elastomeric dampers each have at least one protrusion disposed on each side thereof. An amount of friction between the protrusions and the hub and the rim determines an amount of pre-tensioning in the at least two elastomeric dampers.

In yet another aspect, the invention provides a vehicle comprising a frame, at least one front wheel mounted to the frame, at least one rear wheel mounted to the frame, and an engine mounted to the frame. The engine has a crankshaft, a transmission operatively connected to the engine, and an output shaft having a portion extending from the transmission. The output shaft is operatively connected to the crankshaft via the transmission. A first power transmission wheel is disposed on the portion of the output shaft which extends from the transmission. The first power transmission wheel has a hub and a rim. The hub has a central annular portion. The central annular portion has an inner surface and an outer surface. The inner surface is configured for operatively engaging the output shaft. The rim has an inner annular portion and an outer annular portion. The central annular portion of the hub is disposed inside the inner annular portion of the rim. At least one hub blade extends axially from the hub towards the rim and is disposed radially between the inner and outer annular portions of the rim. At least one rim blade extends axially from the rim towards the hub and extends radially from one of the inner and outer annular portions of the rim towards the other of the inner and outer annular portions. The first power transmission wheel has at least two elastomeric dampers. Each damper is interposed between one of the at least one hub blade and one of the at least one rim blade. A rolling-element bearing is disposed between the outer surface of the central annular portion of the hub and an inner surface of the inner annular portion of the rim. A second power transmission wheel is operatively connected to the rear wheel. A flexible power transmitting element engages the first power transmission wheel and the second power transmission wheel.

Embodiments of the present invention each have at least one of the above-mentioned objects and/or aspects, but do not necessarily have all of them. It should be understood that some aspects of the present invention that have resulted from attempting to attain the above-mentioned objects may not satisfy these objects and/or may satisfy other objects not specifically recited therein.

Additional and/or alternative features, aspects, and advantages of the embodiments of the present invention will become apparent from the following description, the accompanying drawings, and the appended claims.

BRIEF DESCRIPTION OF THE DRAWINGS

For a better understanding of the present invention, as well as other aspects and further features thereof, reference is made to the following description which is to be used in conjunction with the accompanying drawings, where:

Fig. 1 is a side view of an internal combustion engine having a power transmission wheel according to the present invention;

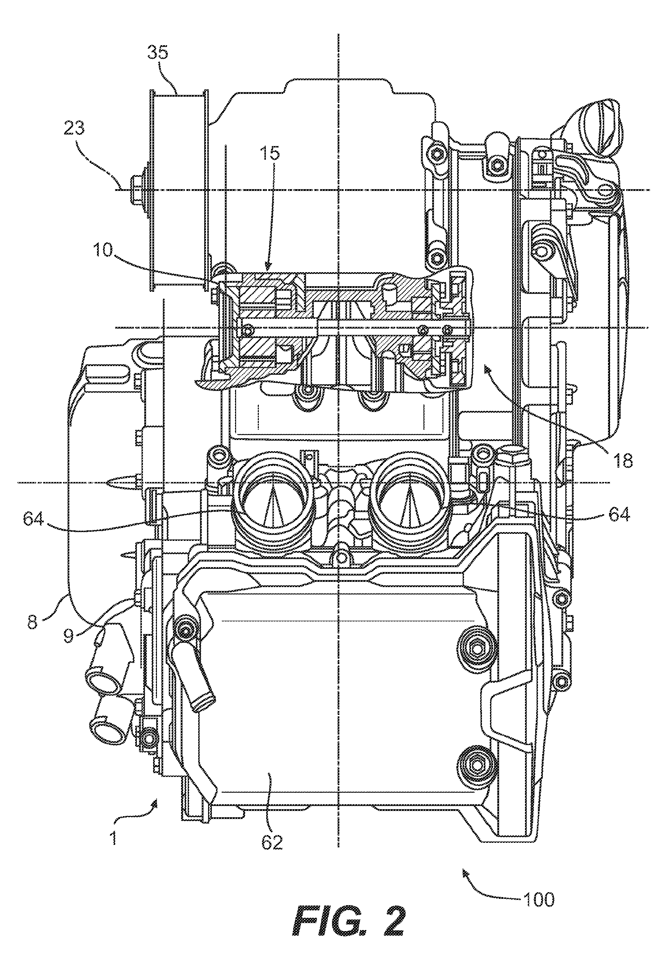

Fig. 2 is a top plan view of the internal combustion engine shown in Fig. 1, with an oil pump device of the engine shown in partial cross-section;

Fig. 3 is a top view of internal components of the internal combustion engine shown in Figs. 1 and 2;

Fig. 4 is an exploded view of a first embodiment of a power transmission wheel according to the present invention;

Fig. 5 is an end view of the hub and elastomeric dampers of the power transmission wheel of Fig. 4;

Fig. 6 is a perspective view of the rim and elastomeric dampers, some of which have been removed, of the power transmission wheel of Fig. 4;

Fig. 7 is a side view of the power transmission wheel of Fig. 4;

Fig. 8 is a cross-section of the power transmission wheel of Fig. 4 taken through line A-A of Fig. 7;

Fig. 9 is a cross-section of the power transmission wheel of Fig. 4 taken through line B-B of Fig. 8;

Fig. 10 is a cross-section of the power transmission wheel of Fig. 4 taken through line C-C of Fig. 8;

Fig. 11 is a side view of a second embodiment of a power transmission wheel according to the present invention;

Fig. 12 is a cross-section of the power transmission wheel of Fig. 11 taken through line D-D of Fig. 11;

Fig. 13 is a cross-section of the power transmission wheel of Fig. 11 taken through line E-E of Fig. 12;

Fig. 14 is a cross-section of the power transmission wheel of Fig. 11 taken through line F-F of Fig. 12;

Fig. 15 is a close-up view of area G of Fig. 13;

Fig. 16 is a schematic diagram illustrating variations in the rotational speed of the crankshaft;

Fig. 17 is a side view of a motorcycle powered by the engine of Fig. 1; and

Fig. 18 is a side view of an all-terrain vehicle (ATV) powered by the engine of Fig. 1.

DETAILED DESCRIPTION OF THE PREFERRED EMBODIMENTS

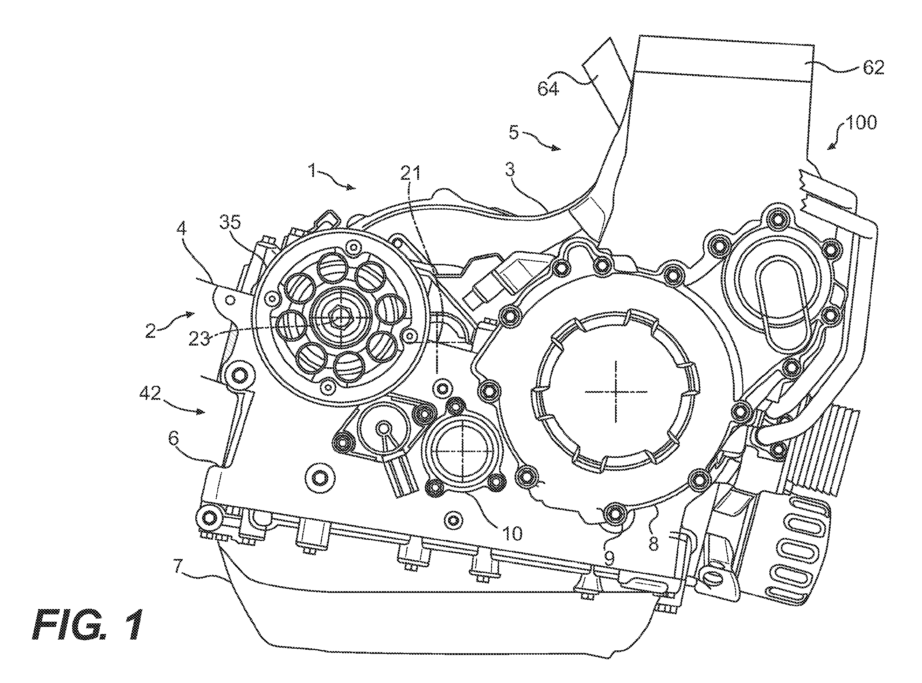

As shown in Fig. 1, an internal combustion engine 100 has a power unit case 1. The power unit case 1 includes a crankcase 2 that is divided into a cylinder block portion 3, which includes the upper part of the crankcase 2 and a cylinder block 5, and a lower crankcase half 6 along a separating plane 4. An oil sump 7 is secured to the lower crankcase half 6. A cylinder head assembly 62 sits atop the cylinder block 5. The cylinder block 5 has two cylinders (not shown) inside each of which one of the pistons 27 or 28 reciprocates. It is contemplated that the engine could also have one, three, or four cylinders. Each of the pistons 27, 28 together with the side wall of its corresponding cylinder and the corresponding portion of the cylinder head assembly 62 forms a combustion chamber (not shown). In one embodiment, the displacement of the engine 100 is preferably 750 cc (cubic centimeters). In another embodiment, the displacement of the engine 100 is preferably at least 700 cc. It is also contemplated that the displacement of the engine 100 could be at least 800 cc or at least 1000 cc. It is also contemplated that the displacement of the engine 100 could be less than 1600 cc or less than 1200 cc

Since the internal combustion engine 100 of the present invention is preferably a four-cycle engine, at least one intake valve per cylinder (not shown) and at least one exhaust valve per cylinder (not shown) are provided in the cylinder head assembly 62. Two intake valves and two exhaust valves per cylinder are preferably provided. A single overhead camshaft (not shown) disposed in the cylinder head assembly 62 and operatively connected to the crankshaft 24, controls the actuation of the intake and exhaust valves. It is contemplated that two overhead camshafts (one for the intake valves and one for the exhaust valves) could be used. A fuel injector (not shown) and a spark plug (not shown) per cylinder are also provided in the cylinder head assembly 62. A pair of throttle bodies 64 (one per cylinder) are used to regulate the quantity of air entering the combustion chambers. An air intake manifold (not shown) or an airbox (not shown) or both, are provided upstream of and in fluid communication with the throttle bodies 64. An exhaust manifold (not shown) in fluid communication with each combustion chamber is provided on the side of the cylinder block 5 opposite the side where the throttle bodies 64 are provided. The exhaust manifold is in fluid communication with the exhaust system of the vehicle incorporating the engine 100. It would be understood that the engine 100 also has other elements and systems not specifically shown and/or described in the present application. These can include, but are not limited to, a starter motor, an oil filter, a cooling system, an electrical system, and a fuel injection system.

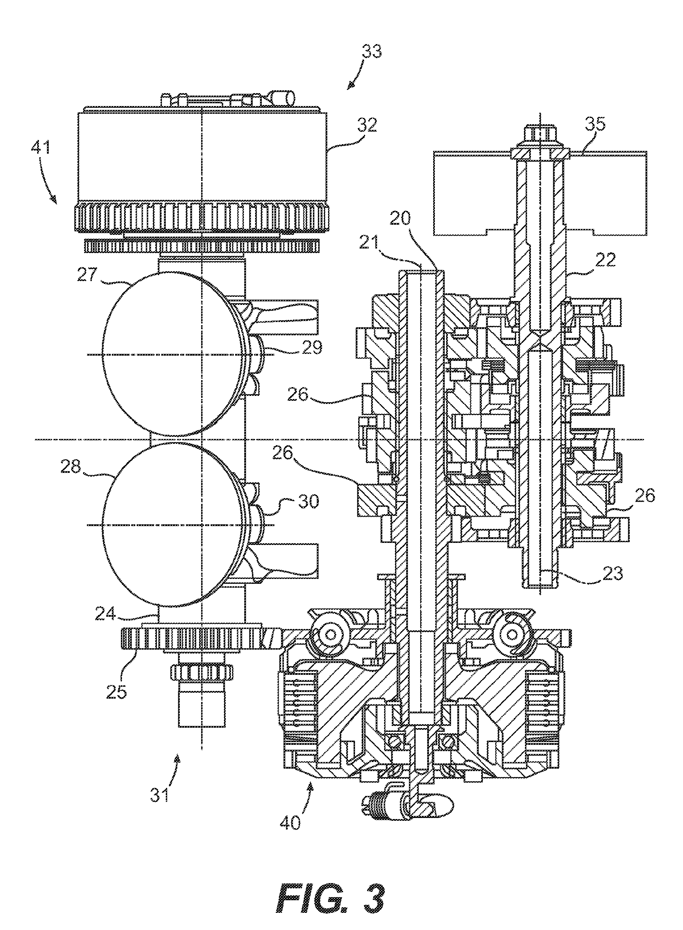

The power unit case 1 also includes an integrated transmission housing 42 which can be made integrally with the crankcase 2 or fastened to the crankcase 2, with bolts for example. The power unit case 1 would also include the transmission housing 42 even if it was not integrally formed with the crankcase 2. The side part of the power unit case 1 has a first housing cover 8 that is secured by at least one fastener 9, such as a screw, to the crankcase 2. When mounted, the first housing cover 8 forms part of the power unit case 1. In the present embodiment, the first housing cover 8 is an ignition cover which can be removed to provide access to an ignition chamber 33 (Fig. 3). The ignition chamber 33 is the space inside the power unit case 1 within which the ignition system or generator-ignition system 32 (Fig. 3) is located. The ignition chamber can be part of the crankcase 2 or can be partially separated from the crankcase 2.

A oil pump cover 10, which is separate from the first housing cover 8, is located beside the first housing cover 8. When mounted, the oil pump cover 10 forms part of the power unit case 1. The oil pump cover 10 can be removed to provide access to an oil suction pump 15 and an oil pressure pump 18. The suction pump 15 draws oil from the oil pan (sump) into an oil tank, whereas the pressure pump 18 takes oil from the oil tank and supplies it to various lubrication points.

Turning now to Fig. 3, it can be seen that the internal combustion engine 100 has a transmission shaft 20 defining a transmission shaft axis 21 and an output shaft 22 defining an output shaft axis 23. The transmission shaft 20 is connected to the crankshaft 24 by way of a primary drive 25 and a clutch 40. The output shaft 22 is connected through a series of gears 26, through a transmission gear box for example, to the transmission shaft 20. The crankshaft 24, the transmission shaft 20, and the output shaft 22 are parallel to each other and are each arranged and/or supported in bearings intersected by the separating plane 4 of the crankcase 2.

As can be seen in Fig. 3, two pistons 27, 28 are connected to the crankshaft 24 by connecting rods 29, 30. The generator-ignition system 32 is disposed at the first end 41 of the crankshaft 24 and the primary drive 25, preferably a gear, for driving the transmission shaft 20 is disposed at the second end 31 of the crankshaft 24, opposite the first end. The generator-ignition system 32 is housed in the ignition chamber 33. The crankshaft 24 and the components disposed thereon and which rotate therewith about the crankshaft axis define the crank drive of the engine 100. The crank drive does not include the connecting rods 29, 30 even though they are connected to the crankshaft 24 as they do not rotate with the crankshaft 24 about the crankshaft axis. In the present embodiment, the crank drive consists of the crankshaft 24, the primary drive 25, the generator-ignition system 32 and the gears disposed on the crankshaft 24. In a preferred embodiment, the rotational inertia of the crank drive, as defined about the crankshaft axis, is less than 274 kg·cm$^2$. More preferably, the rotational inertia of the crank drive is less than 250 kg·cm$^2$. More preferably, the rotational inertia of the crank drive is less than 220 kg·cm$^2$. More preferably, the rotational inertia of the crank drive is less than 200 kg·cm$^2$. More preferably, the rotational inertia of the crank drive is less than 186 kg·cm$^2$. Even more preferably, the rotational inertia of the crank drive is less than 170 kg·cm$^2$. The rotational inertia can be determined , by way of non-limiting example, experimentally by librating the crank drive or by calculations based on a 3-dimensional model of the crank drive as would be understood by a person skilled in the art.

As can be seen from Figs. 1 and 3, a power transmission wheel 35 is located on a portion of the output shaft 22 which extends from the crankcase 2. This power transmission wheel 35 can, by way of non-limiting example, be in the form of a notched belt pulley or a sprocket, and is used to drive another power transmission wheel operatively connected to a wheel or wheels of a vehicle via a flexible power transmitting element, such as a notched belt or chain, depending of the form of the power transmission wheels. Two possible embodiments (35A and 35B) of the power transmission wheel 35 according to the present invention are described below.

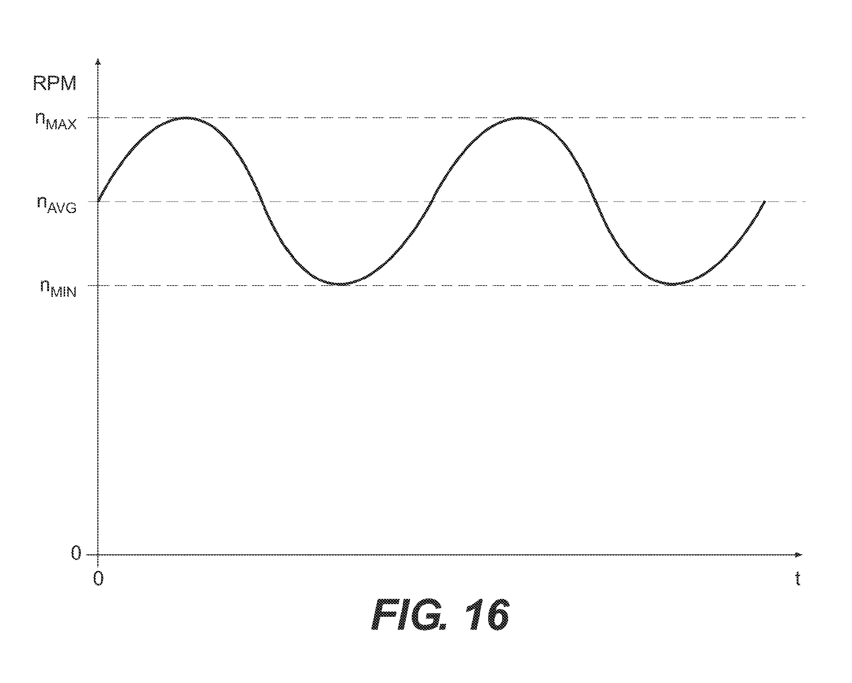

As illustrated in Fig. 16, the rotational speed of the crankshaft 24, and therefore the torque, varies over one working cycle of the engine. For four-stroke engines, one working cycle corresponds to two revolutions of the crankshaft 24. For two-stroke engines, one working cycle corresponds to one revolution of the crankshaft. The speed peaks during the combustion events and bottoms between the combustion events. Fig. 16 is a schematic illustration of the variation in the rotational speed of the crankshaft 24 of a two cylinder four-stroke engine during one working cycle. It is possible to quantify the amount of variation as a percentage. This percentage is referred to herein as the non-uniformity of rotation. The non-uniformity of rotation is determined during one working cycle when the engine 100 is running with the transmission in its highest gear at full load (i.e. fully opened throttle). The non-uniformity of rotation of the crankshaft 24 is calculated as:

$$(n_{MAX} - n_{MIN}) \times 100 / n_{AVG}$$

where $n_{MAX}$ is the maximum rotational speed of the crankshaft 24 during the working cycle, $n_{MIN}$ is the minimum rotational speed of the crankshaft 24 during the working cycle, and $n_{AVG}$ is the average rotational speed of the crankshaft 24 during the working cycle. The engine 100 according to the present invention has a non-uniformity of rotation of the crankshaft 24 of at least 4 % at an average rotational speed of the crankshaft 24 of 8000 RPM. It is contemplated that the non-uniformity of rotation of the crankshaft 24 could also be at least 5, 6, 7, or 8 % at an average rotational speed of the crankshaft 24 of 8000 RPM. In another embodiment, the engine 100 according to the present invention has a non-uniformity of rotation of the crankshaft 24 of at least 6 % at an average rotational speed of the crankshaft 24 of 6000 RPM. It is contemplated that the non-uniformity of rotation of the crankshaft 24 could also be at least 7, 9, or 11 % at an average rotational speed of the crankshaft 24 of 6000 RPM.

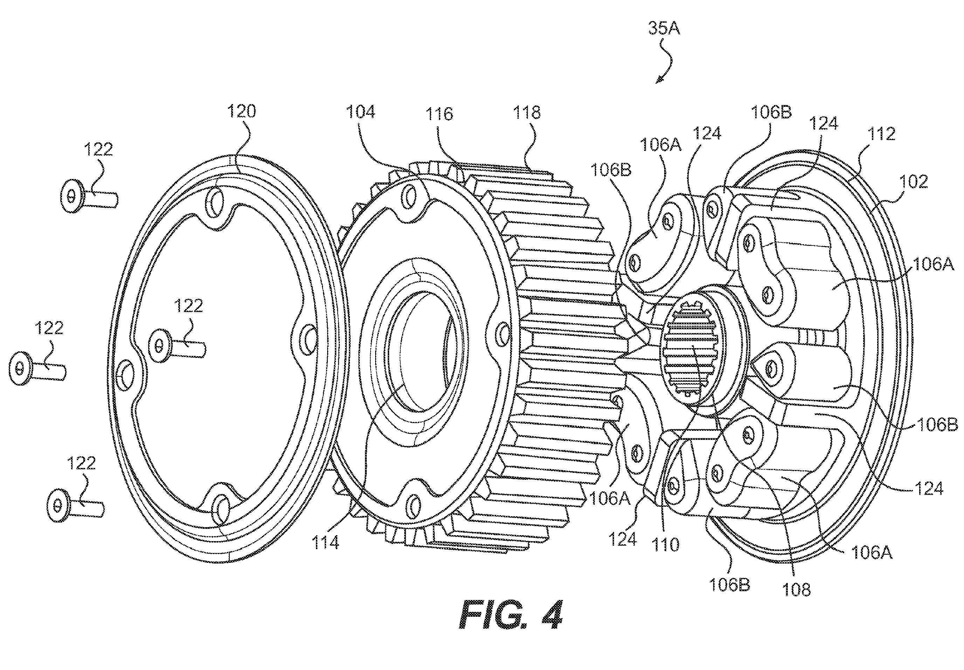

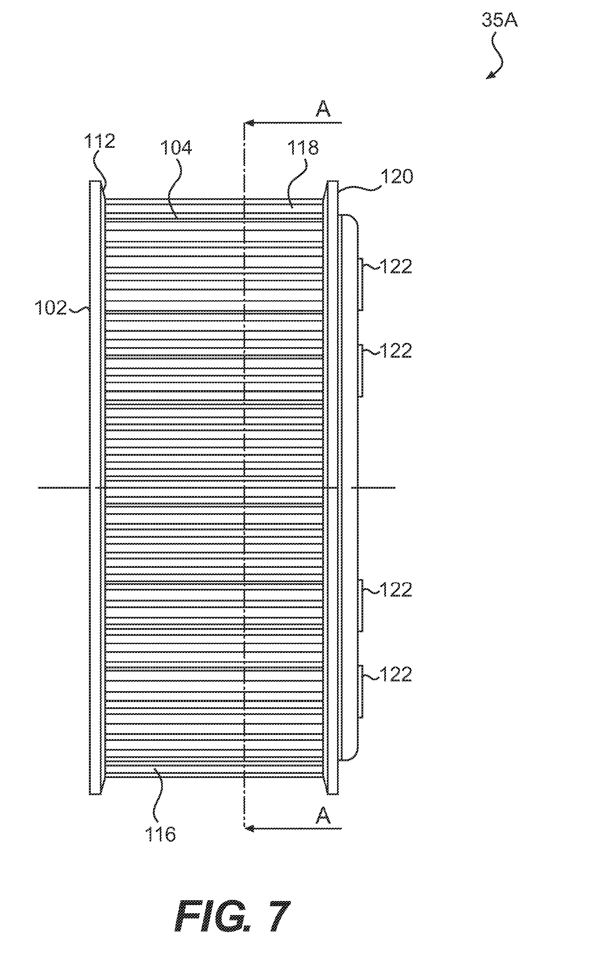

Turning to Figs. 4 to 10, a first embodiment of a power transmission wheel 35A will now be described. The power transmission wheel 35A is made of a hub 102 and a rim 104 with elastomeric dampers 106A, 106B disposed between the two. The elastomeric dampers 106A, 106B permit the rim 104 to rotate partially relative to the hub 102 when torque fluctuations occur in the engine's output. This torsional damping results in a more uniform transfer of torque from the engine 100 to the wheel(s) of a vehicle during at least some operating conditions of the engine 100.

The hub 102 has a central annular portion 108. The inner surface of the central annular portion 108 has splines 110 to operatively engage splines on the output shaft 22. It is contemplated that instead of splines 110, the central annular portion 108 could be keyed or otherwise configured to operatively engage a corresponding configuration of the output shaft 22. The hub 102 also has an integrated flange 112 which prevents axial displacement of the flexible power transmitting element, which in the embodiment shown is a notched belt, on the power transmission wheel 35A. It is contemplated that the flange 112 could be a separate element connected to the hub 102.

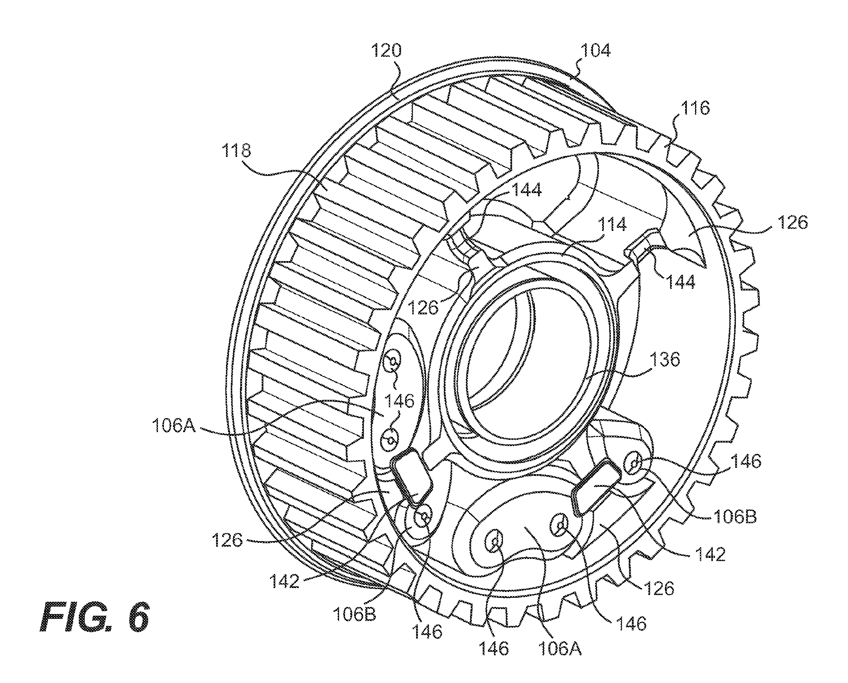

As best seen in Fig. 6, the rim 104 has an inner annular portion 114 and an outer annular portion 116. The outer surface of the outer annular portion 116 has a plurality of teeth 118 thereon for engaging a flexible power transmitting element. In the embodiment shown, the power transmission wheel 35A is a notched belt pulley and the teeth 118 are therefore configured to operatively engage a notched belt. It is contemplated that the power transmission wheel 35A could be a sprocket, in which case the teeth 118 would be configured to operatively engage a chain. A flange 120 is connected to the rim 104 via fasteners 122. The flange 120 prevents axial displacement of the flexible power transmitting element on the power transmission wheel 35A. It is contemplated that the flange 120 could be integrated with the rim 104.

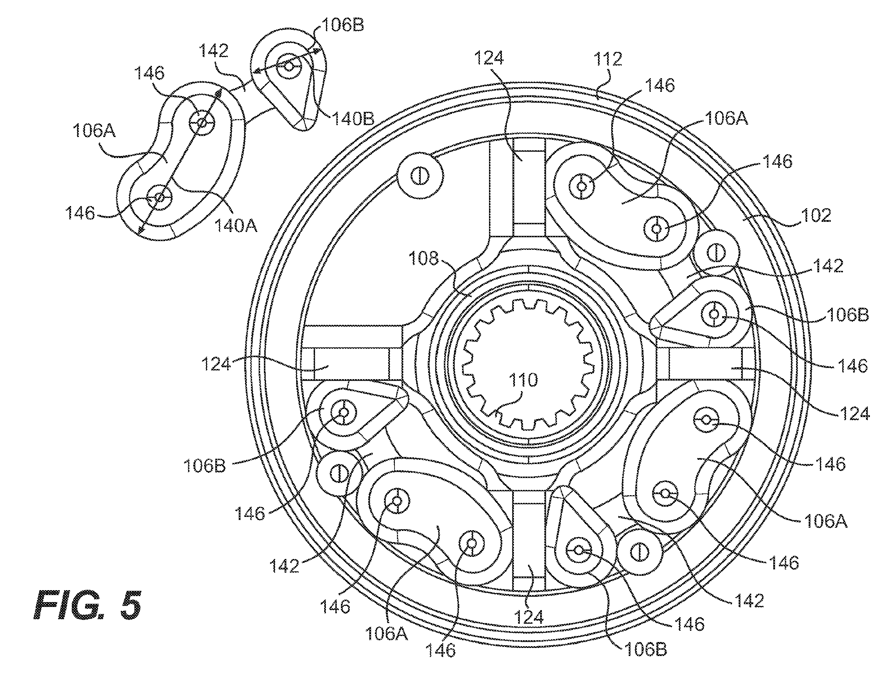

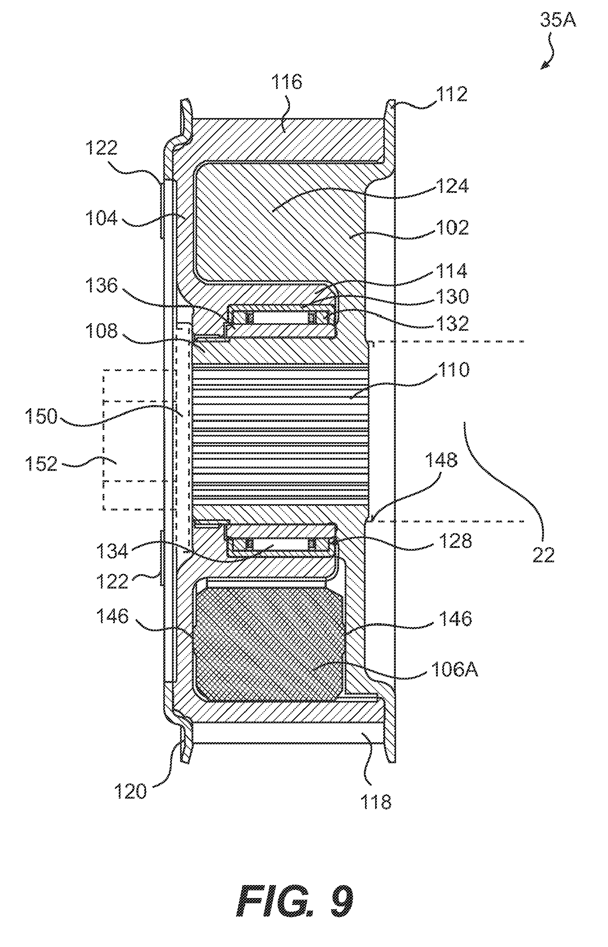

The hub 102 has four hub blades 124 which, as seen in Fig. 5, are equally spaced around a circumference of the hub 102. As best seen in Fig. 9, when the hub 102 is assembled with the rim 104, the hub blades 124 extend axially from the hub 102 towards the rim 104. As also seen in Fig. 9, the hub blades 124 extend radially between the inner annular portion 114 and the outer annular portion 116 of the rim 104.

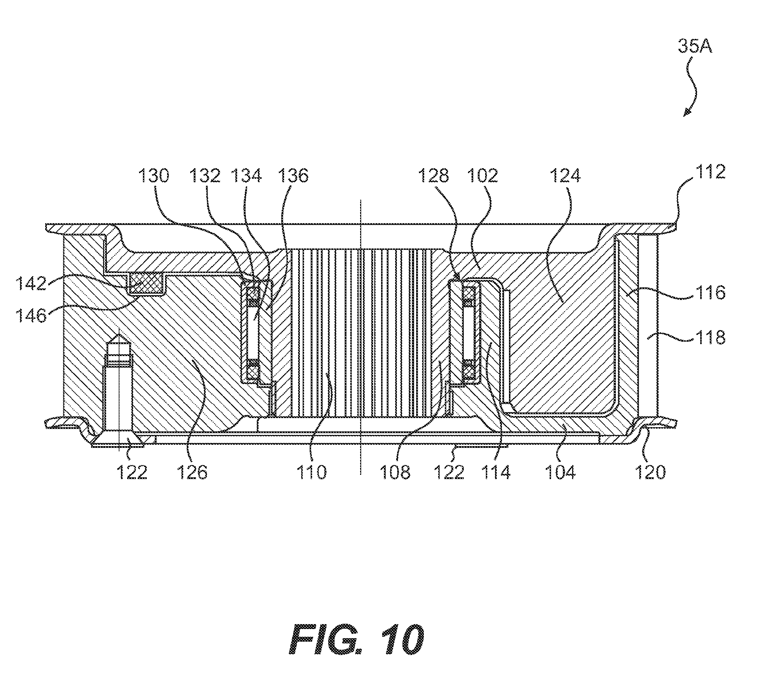

The rim 104 has four rim blades 126 which, as seen in Fig. 6, are equally spaced around a circumference of the rim 104. As seen in Fig. 10, when the rim 104 is assembled with the hub 102, the rim blades 126 extend axially from the rim 104 towards the hub 102. The rim blades 126 extend radially from the inner annular portion 114 to the outer annular portion 116 of the rim 104. It is contemplated that the rim blades 126 could extend from the inner annular portion 114 towards the outer annular portion 116 of the rim 104, but without being connected to the outer annular portion 116. It is also contemplated that the rim blades 126 could extend from the outer annular portion 116 towards the inner annular portion 114 of the rim 104, but without being connected to the inner annular portion 114.

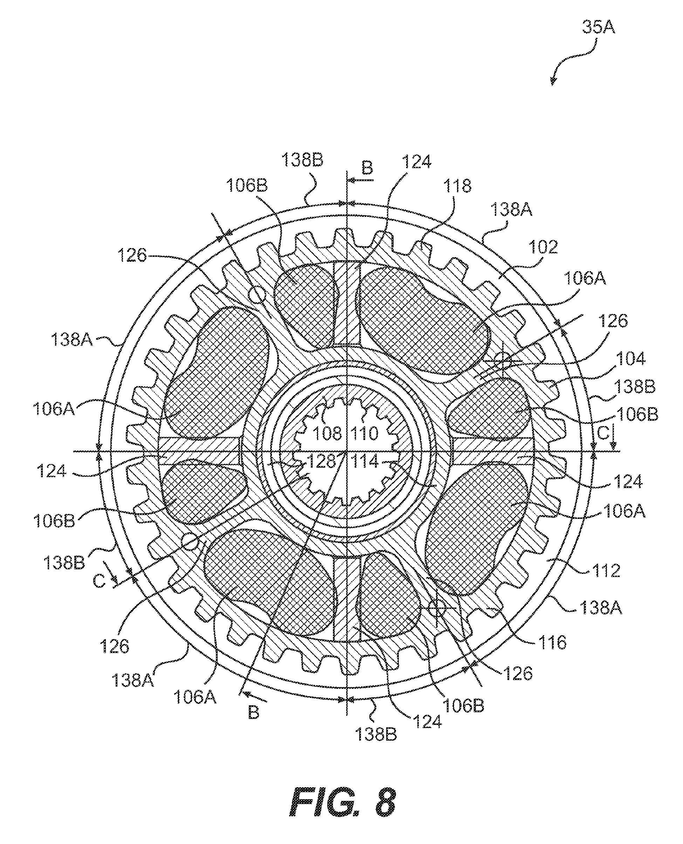

As seen in Figs. 8 to 10, when the hub 102 and the rim 104 are assembled together, the central annular portion 108 of the hub 102 is disposed inside the inner annular portion 114 of the rim 104. As best seen in Figs. 9 and 10, a rolling-element bearing 128 is disposed between the outer surface of the central annular portion 108 and the inner surface of the inner annular portion 114. The rolling-element bearing 128 facilitates the partial rotation of the rim 104 relative to the hub 102 when torque fluctuations occur in the engine's output. The rolling-element bearing 128 is preferably a needle bearing having an outer race 130 containing the needle cage 132 and needles 134. The outer race 130, the needle cage 132, and the needles 134 are disposed around an inner sleeve 136. Preferably, the needle bearing is lubricated by grease and sealing elements are integrated to the outer race 130. It is contemplated that other types of rolling-element bearings could be used, such as a roller bearing or one or more ball bearings. The rolling-element bearing 128 is preferably at least partially axially aligned with the outer annular portion 116 of the rim 104 such that the tension in the flexible power transmitting element applies mostly radial forces to the rolling-element bearing 128 and applies little moment. In the embodiment shown, the rolling-element bearing 128 is axially aligned with the outer annular portion 116 (i.e. it does not extend axially beyond the outer annular portion 116).

As seen in Fig. 8, the hub 102 and the rim 104 are assembled together such that eight arcs 138A, 138B are defined between the four hub blades 124 and the four rim blades 126 along the outer surface of the outer annular portion 116 of the rim 104. As can be seen, the four arcs 138A are longer than the four arcs 138B. The arcs 138A and the arcs 138B alternate along a circumference of the outer surface of the outer annular portion 116.

The power transmission wheel 35A is provided with two types of elastomeric dampers 106A and 106B. The four elastomeric dampers 106A have a generally reniform shape and have a first width 140A (Fig. 5). The four elastomeric damper 106 B have a generally teardrop shape and have a second width 140B (Fig. 5) which is less than the width 140A of the elastomeric dampers 106A. The volume of each of the four elastomeric dampers 106A is preferably greater than the volume of each of the four elastomeric dampers 106B. Preferably, the volume of each of the four elastomeric dampers 106A is preferably two to three times greater than the volume of each of the four elastomeric dampers 106B. Each elastomeric damper 106A is connected to one elastomeric damper 106B by a connector 142 (see Fig. 5). The connector 142 is preferably made of the same material as the as the elastomeric dampers 106A, 106B. Each assembly of the elastomeric dampers 106A, 106B and the connector 142 is preferably integrally formed. Each of the four elastomeric dampers 106A is interposed between one of the hub blades 124 and one of the rim blades 126 which define therebetween one of the four arcs 138A. Each of the four elastomeric dampers 106B is interposed between one of the hub blades 124 and one of the rim blades 126 which define therebetween one of the four arcs 138B. The connectors 142 are each received in a groove 144 (Figs. 6 and 10) in each rim blade 126. The elastomeric dampers 106A and 106B are provided with protrusions 146 on each side thereof (two per side for the elastomeric dampers 106A, one per side for the elastomeric dampers 106B). The protrusions 146 are the portions of the elastomeric dampers 106A, 106B which make axial contact with the hub 102 and the rim 104. The amount of friction between the protrusions 146 and the hub 102 and the rim 104 determines the amount of pretensioning in the elastomeric dampers 106A, 106B.

Fig. 9 illustrates the arrangement of the power transmission wheel 35A on the output shaft 22. The power transmission wheel 35A is disposed on a splined portion of the shaft 22. On one side of the power transmission wheel 35A, the hub 102 abuts a shoulder 148 formed by the output shaft 22. On the other side of the power transmission wheel 35A, a ring 150 is placed in a recess in the rim 104. A bolt 152 is fastened to the end of the output shaft 22. Since the ring 150 is disposed between the bolt 152 and the rim 104, the power transmission wheel 35A is retained on the output shaft between the ring 150 and the shoulder 148. Fastening the bolt 152 also causes the elastomeric dampers 106A, 106B to be axially compressed between the hub 102 and the rim 104.

During operation, when there is a fluctuation in the engine's output, the hub 102 and the rim 104 rotate relative to each other. When there is an increase in output torque from the engine 100 or when the second power transmission wheel to which the first power transmission wheel 35A is operatively connected in braked, the elastomeric dampers 106A are compressed between the hub blades 124 and the rim blades 126. When there is an decrease in output torque from the engine 100 or when the second power transmission wheel to which the first power transmission wheel 35A is operatively connected is accelerated (more than by the acceleration provided by the engine 100, when going downhill for example), the elastomeric dampers 106B are compressed between the hub blades 124 and the rim blades 126. When compressed, the elastomeric dampers 106A, 106B generate a counter-balancing force in response to the compression. Thus, the power transmission wheel 35A provides torsional damping, which results in a more uniform torque transfer from the engine 100 to the wheel(s) of the vehicle which it powers during at least some operating conditions of the engine 100. It is possible to adjust the amount of torsional damping provided by the power transmission wheel 35A by modifying the amount of friction between the protrusions 146 and the hub 102 and the rim 104. This can be achieved by dimensioning the hub 102 and wheel 104 such that the dampers 106A, 106B are more or less compressed, by using dampers 106A, 106B having different thicknesses, and/or by using dampers 106A, 106B with different sizes of protrusions 146 to name a few. Increasing the friction between the protrusions 146 and the hub 102 and the rim 104 results in less torsional damping. Decreasing the friction between the protrusions 146 and the hub 102 and the rim 104 results in more torsional damping.

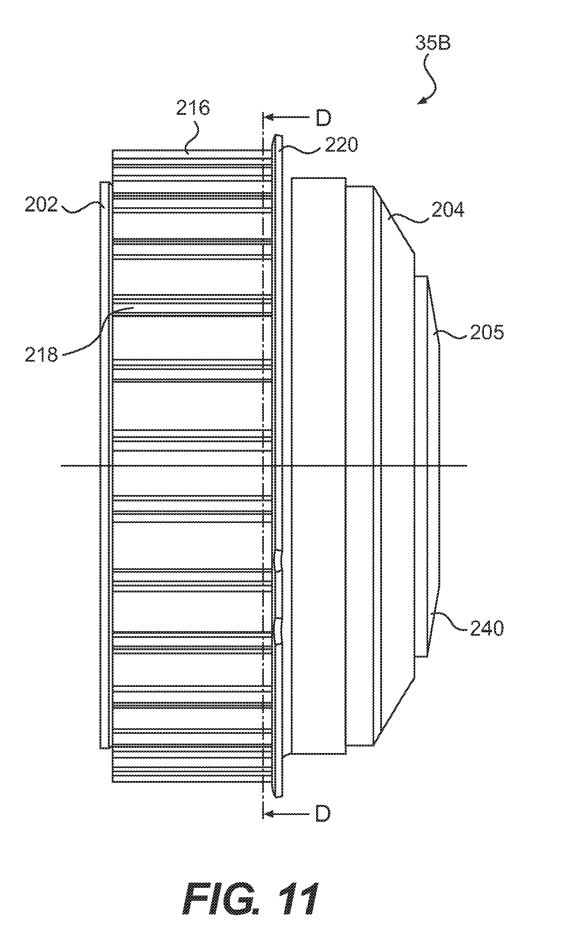

Turning to Figs. 11 to 14, a second embodiment of a power transmission wheel 35B will now be described. The power transmission wheel 35B is made of a hub 202, a rim 204, and an insert 205 with elastomeric dampers 206A, 206B disposed between the hub 202 and the rim 204. The elastomeric dampers 206A, 206B permit the rim 204 to rotate partially relative to the hub 202 when torque fluctuations occur in the engine's output. This torsional damping results in a more uniform transfer of torque from the engine 100 to the wheel(s) of a vehicle during at least some operating conditions of the engine 100.

The hub 202 has a central annular portion 208. The inner surface of the central annular portion 208 has splines 210 to operatively engage splines on the output shaft 22. It is contemplated that instead of splines 210, the central annular portion 208 could be keyed or otherwise configured to operatively engage a corresponding configuration of the output shaft 22.

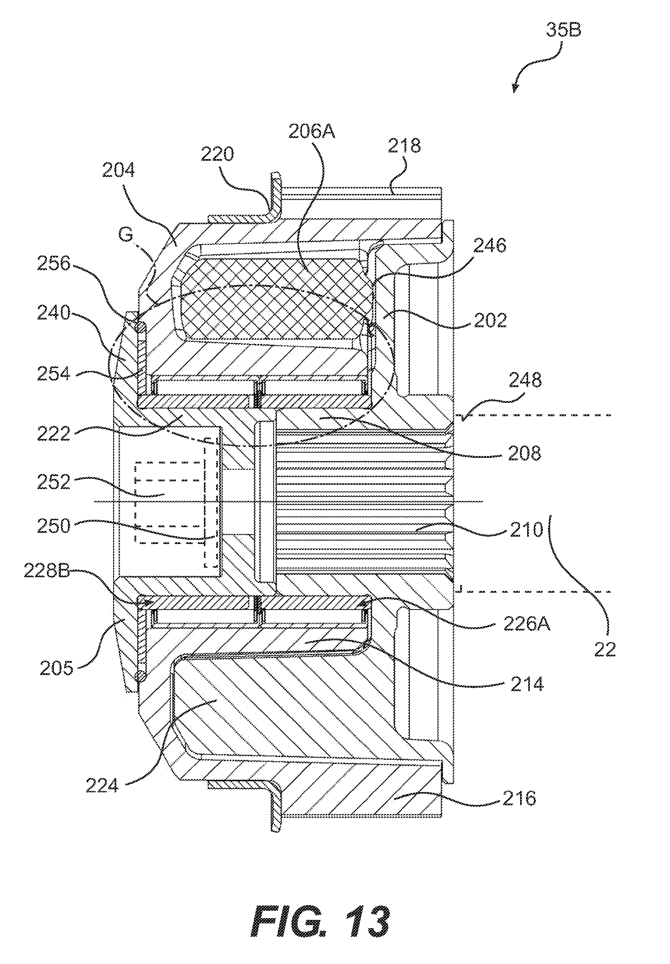

As best seen in Fig. 13, the rim 204 has an inner annular portion 214 and an outer annular portion 216. The outer surface of the outer annular portion 216 has a plurality of teeth 218 thereon for engaging a flexible power transmitting element. In the embodiment shown, the power transmission wheel 35B is a notched belt pulley and the teeth 218 are therefore configured to operatively engage a notched belt. It is contemplated that the power transmission wheel 35B could be a sprocket, in which case the teeth 218 would be configured to operatively engage a chain. A flange 220 is connected to the rim 204. The flange 220 prevents axial displacement of the flexible power transmitting element on the power transmission wheel 35B. It is contemplated that the flange 220 could be integrated with the rim 204.

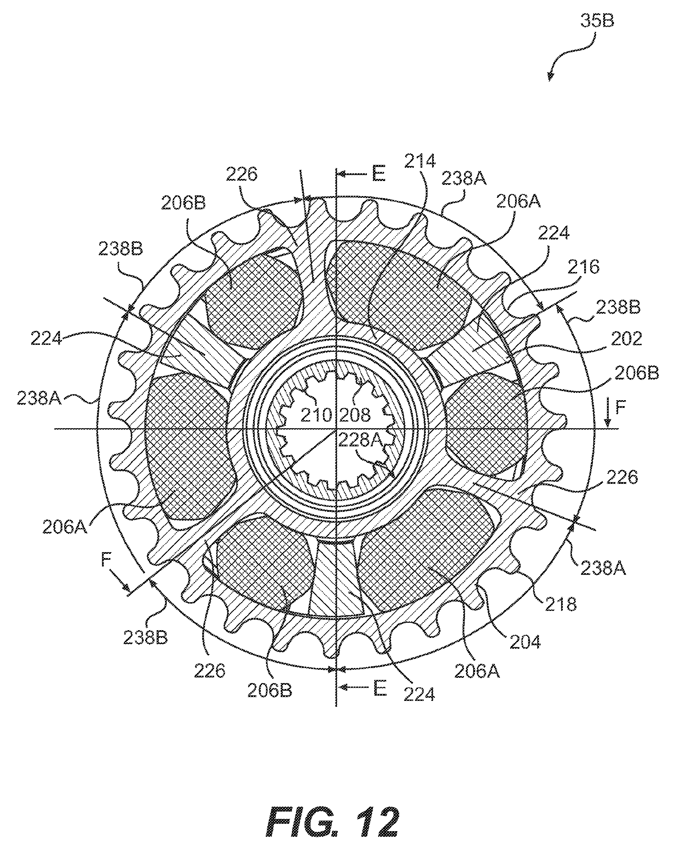

The hub 202 has three hub blades 224 which, as seen in Fig. 12, are equally spaced around a circumference of the hub 202. As best seen in Fig. 13, when the hub 202 is assembled with the rim 204, the hub blades 224 extend axially from the hub 202 towards the rim 204. As also seen in Fig. 13, the hub blades 224 extend radially between the inner annular portion 214 and the outer annular portion 216 of the rim 204.

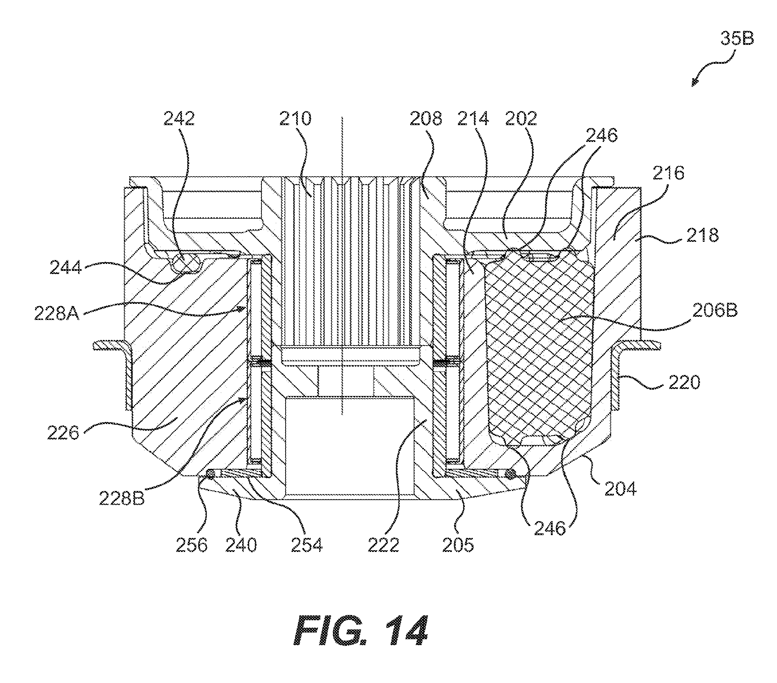

The rim 204 has three rim blades 226 which, as seen in Fig. 12, are equally spaced around a circumference of the rim 204. As seen in Fig. 14, when the rim 204 is assembled with the hub 202, the rim blades 226 extend axially from the rim 204 towards the hub 202. The rim blades 226 extend radially from the inner annular portion 214 to the outer annular portion 216 of the rim 204. It is contemplated that the rim blades 226 could extend from the inner annular portion 214 towards the outer annular portion 216 of the rim 204, but without being connected to the outer annular portion 216. It is also contemplated that the rim blades 226 could extend from the outer annular portion 216 towards the inner annular portion 214 of the rim 204, but without being connected to the inner annular portion 214.

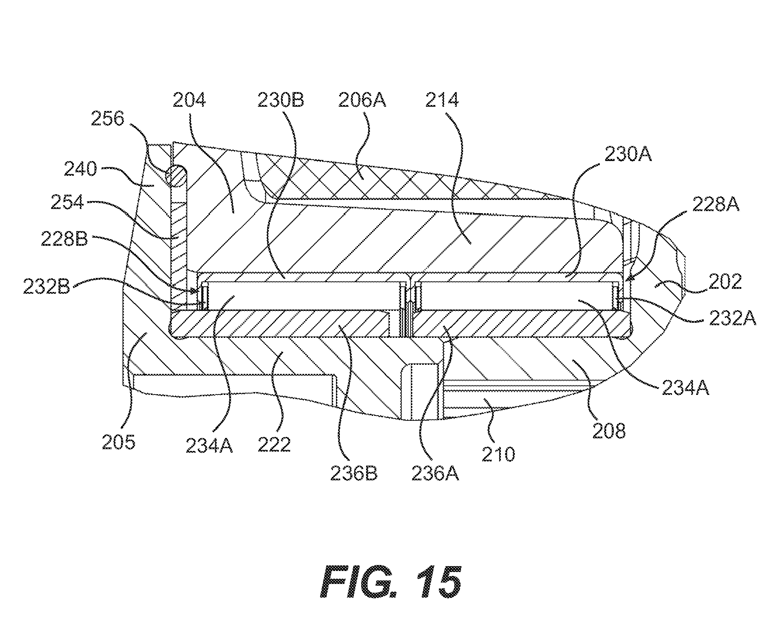

As seen in Figs. 12 to 15, when the hub 202, the rim 204, and the insert 205 are assembled together, the central annular portion 208 of the hub 202 and the cylindrical portion 222 of the insert 205 are disposed inside the inner annular portion 214 of the rim 204. As best seen in Fig. 15 , a first rolling-element bearing 228A is disposed between the outer surface of the central annular portion 208 and the inner surface of the inner annular portion 214. A second rolling-element bearing 228B is disposed next to the first rolling-element bearing 228A between the outer surface of the cylindrical portion 222 of the insert 205 and the inner surface of the inner annular portion 214. The rolling-element bearings 228A, 228B facilitate the partial rotation of the rim 204 relative to the hub 202 when torque fluctuations occur in the engine's output. The rolling-element bearing 228A is preferably a needle bearing having an outer race 230A containing the needle cage 232A and needles 234A. The outer race 230A, the needle cage 232A, and the needles 234A are disposed around an inner sleeve 236A. Preferably, the needle bearing is lubricated by grease and sealing elements are integrated to the outer race 230A. Similarly, the rolling element bearing 228B is preferably a needle bearing having an outer race 230B, a needle cage 232B, and needles 234B disposed around an inner sleeve 236B. It is contemplated that other types of rolling-element bearings could be used, such as roller bearings or ball bearings. The rolling-element bearing 228A is preferably at least partially axially aligned with the outer annular portion 216 of the rim 204 such that the tension in the flexible power transmitting element applies mostly radial forces to the rolling-element bearing 228A and applies little moment. In the embodiment shown, the rolling-element bearing 228A is axially aligned with the outer annular portion 216 (i.e. it does not extend axially beyond the outer annular portion 216).

As seen in Fig. 12, the hub 202 and the rim 204 are assembled together such that six arcs 238A, 238B are defined between the three hub blades 224 and the three rim blades 226 along the outer surface of the outer annular portion 216 of the rim 204. As can be seen, the three arcs 238A are longer than the three arcs 238B. The arcs 238A and the arcs 238B alternate along a circumference of the outer surface of the outer annular portion 216.

The power transmission wheel 35B is provided with two types of elastomeric dampers 206A and 206B. The three elastomeric dampers 206A are wider and more voluminous than the elastomeric dampers 206A. Each elastomeric damper 206A is connected to one elastomeric damper 206B by a connector 242 (Fig. 14). The connector 242 is preferably made of the same material as the as the elastomeric dampers 206A, 206B. Each assembly of the elastomeric dampers 206A, 206B and the connector 242 is preferably integrally formed. Each of the three elastomeric dampers 206A is interposed between one of the hub blades 224 and one of the rim blades 226 which define therebetween one of the three arcs 238A. Each of the three elastomeric dampers 206B is interposed between one of the hub blades 224 and one of the rim blades 226 which define therebetween one of the three arcs 238B. The connectors 242 are each received in a groove 244 (Fig. 14) in each rim blade 226. The elastomeric dampers 206A and 206B are provided with protrusions 246 on each side thereof (Figs. 13 and 14). The protrusions 246 are the portions of the elastomeric dampers 206A, 206B which make axial contact with the hub 202 and the rim 204. The amount of friction between the protrusions 246 and the hub 202 and the rim 204 determines the amount of pre-tensioning in the elastomeric dampers 206A, 206B.

Fig. 13 illustrates the arrangement of the power transmission wheel 35B on the output shaft 22. The power transmission wheel 35B is disposed on a splined portion of the shaft 22. On one side of the power transmission wheel 35B, the hub 202 abuts a shoulder 248 formed by the output shaft 22. The rim 204 is retained between the hub 202 and a flanged portion 240 of the insert 205. Friction rings 254, 256 are disposed between the flanged portion 240 of the insert 205 and the rim 204 to prevent wearing of the flanged portion 240 and to seal the cavity in which the bearings 228A, 228B are located. On the other side of the power transmission wheel 35B, a ring 250 is placed in a recess in the insert 205. A bolt 252 is fastened to the end of the output shaft 22. Since the ring 250 is disposed between the bolt 252 and the insert 205, the power transmission wheel 35B is retained on the output shaft between the ring 250 and the shoulder 248. Fastening the bolt 252 also causes the elastomeric dampers 206A, 206B to be axially compressed between the hub 202 and the rim 204.

During operation, when there is a fluctuation in the engine's output, the hub 202 and the rim 204 rotate relative to each other. When there is an increase in output torque from the engine 100 or when the second power transmission wheel to which the first power transmission wheel 35B is operatively connected in braked, the elastomeric dampers 206A are compressed between the hub blades 224 and the rim blades 226. When there is an decrease in output torque from the engine 100 or when the second power transmission wheel to which the first power transmission wheel 35B is operatively connected is accelerated (more than by the acceleration provided by the engine 100, when going downhill for example), the elastomeric dampers 206B are compressed between the hub blades 224 and the rim blades 226. When compressed, the elastomeric dampers 206A, 206B generate a counter-balancing force in response to the compression. Thus, the power transmission wheel 35B provides torsional damping, which results in a more uniform torque transfer from the engine 100 to the wheel(s) of the vehicle which it powers during at least some operating conditions of the engine 100. It is possible to adjust the amount of torsional damping provided by the power transmission wheel 35B by tightening or loosening the bolt 252. Tightening the bolt 252 increases the friction between the friction rings 254, 256 and the rim 204 which results in less torsional damping. Loosening the bolt 252 reduces the friction between the friction rings 254, 256 and the rim 204 which results in more torsional damping.

It is contemplated that the power transmission wheels 35A, 35B described above could be provided with more or less hub blades, rim, blades, and elastomeric dampers. For example, the power transmission wheel 35A could be provided with one hub blade 124, one rim blade 126, and two elastomeric dampers 106 (one elastomeric dampers 106A and one elastomeric dampers 106B).

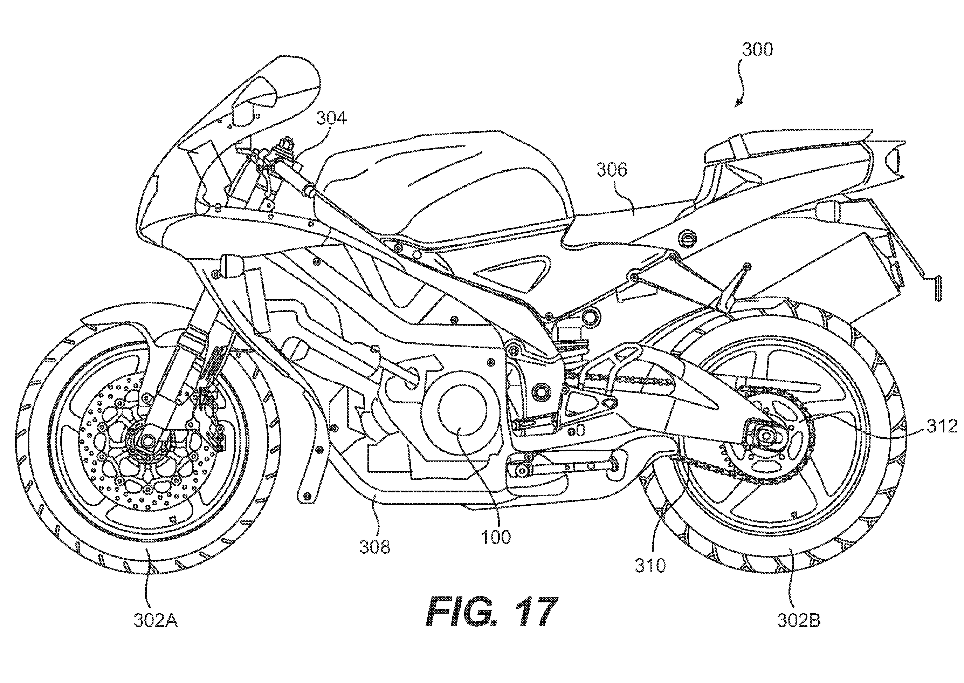

The internal combustion engine 100 can be used to power a motorcycle 300, as shown in Fig. 17. The motorcycle 300 has two wheels 302A, 302B, a handlebar 304 to steer the front wheel 302A, and a straddle-type seat 306. The engine 100 is mounted to the frame 308 of the motorcycle 300 below the seat 306. The engine 100 powers the motorcycle 300 by having a chain 310 engage the power transmission wheel 35 (a sprocket) disposed on the output shaft 22 of the engine 100 and the power transmission wheel 312 (a sprocket) operatively connected to the rear wheel 302B.

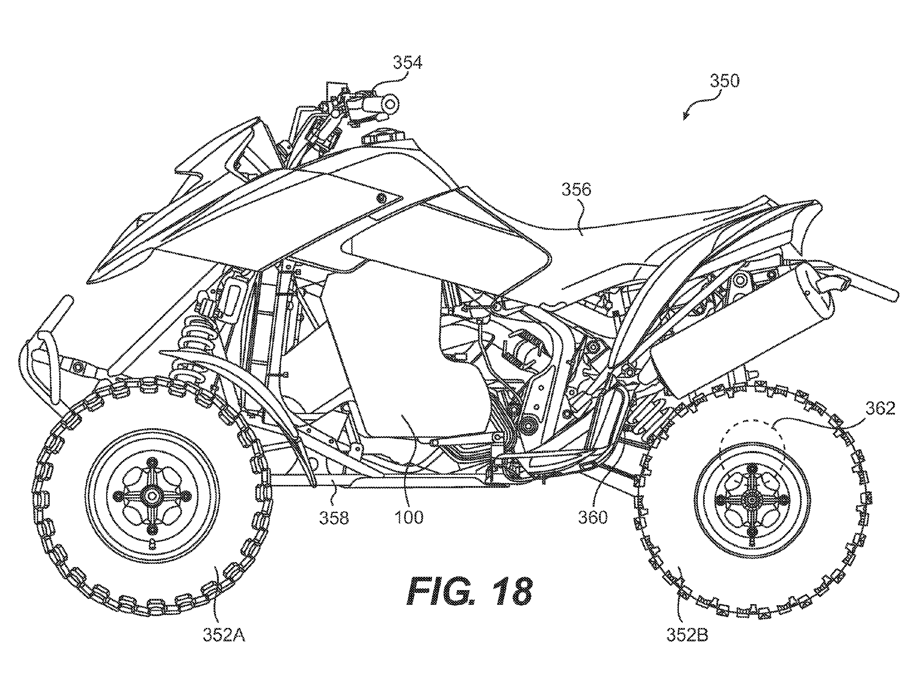

The internal combustion engine 100 can also be used to power an ATV 350, as shown in Fig. 18. The ATV 350 has two front wheels 352A, two rear wheels 352B, a handlebar 354 to steer the two front wheels 352A, and a straddle-type seat 356. The engine 100 is mounted to the frame 358 of the ATV 350 below the seat 356. The engine 100 powers the ATV 350 by having a notched belt 360 engage the power transmission wheel 35 (a notched belt pulley) disposed on the output shaft 22 of the engine 100 and the power transmission wheel 362 (a notched belt pulley) operatively connected to the two rear wheels 352B.

It is contemplated that the internal combustion engine 100 described above could also be used to power other motorized recreational vehicles such as three-wheeled straddle-type vehicles, snowmobiles, karts, and small utility vehicles.

Modifications and improvements to the above-described embodiments of the present invention may become apparent to those skilled in the art. The foregoing description is intended to be exemplary rather than limiting. The scope of the present invention is therefore intended to be limited solely by the scope of the appended claims.

**Claims**

1. A power transmission wheel comprising:

   a hub having a central annular portion, the central annular portion having an inner surface and an outer surface, the inner surface being configured for operatively engaging a power transmitting shaft;
   a rim having an inner annular portion and an outer annular portion, the central annular portion of the hub being disposed inside the inner annular portion of the rim, and the outer annular portion of the rim having an outer surface configured for operatively engaging a flexible power transmitting element;
   at least one hub blade extending axially from the hub towards the rim and being disposed radially between the inner and outer annular portions of the rim;
   at least one rim blade extending axially from the rim towards the hub and extending radially from one of the inner and outer annular portions of the rim towards the other of the inner and outer annular portions;
   at least two elastomeric dampers, each damper being interposed between one of the at least one hub blade and one of the at least one rim blade; and
   a rolling-element bearing disposed between the outer surface of the central annular portion of the hub and an inner surface of the inner annular portion of the rim.

2. The power transmission wheel of claim 1, wherein the at least one hub blade is four hub blades, the at least one rim blade is four rim blades, and the at least two elastomeric dampers are eight elastomeric dampers.

3. The power transmission wheel of claim 2, wherein the four hub blades are equally spaced around a circumference of the hub;
   wherein the four rim blades are equally spaced around a circumference of the rim;
   wherein eight arcs are defined between the four hub blades and the four rim blades along the outer surface of the outer annular portion of the rim, four of the eight arcs having a first arc length, four of the eight arcs having a second arc length, the first arc length being greater than the second arc length, the hub and the rim being disposed such that the arcs having the first arc length and the arcs having the second arc length alternate along a circumference of the outer surface of the outer annular portion;
   wherein four of the eight elastomeric dampers have a first width, four of the elastomeric dampers have a second width, the first width being greater than the second width; and
   wherein each of the four elastomeric dampers having the first width is interposed between one of the hub blades and one of the rim blades which define therebetween one of the four arcs having the first arc length, and each of the four elastomeric dampers having the second width is interposed between one of the hub blades and one of the rim blades which define therebetween one of the four arcs having the second arc length.

4. The power transmission wheel of claim 3, wherein the elastomeric dampers having the first width have a greater volume than the elastomeric dampers having the second width.

5. The power transmission wheel of claim 1, wherein the rolling-element bearing is a needle bearing.

6. The power transmission wheel of claim 1, wherein the rolling element bearing is at least partially axially aligned with the outer surface of the outer annular portion of the rim.

7. The power transmission wheel of claim 1, wherein the outer surface of the rim is configured for operatively engaging a flexible power transmitting element by being toothed for operatively engaging one of a notched belt and a chain.

8. The power transmission wheel of claim 1, wherein the at least one rim blade extends from the inner annular portion of the rim to the outer annular portion of the rim.

9. The power transmission wheel of claim 1, further comprising:

   a bolt for fastening the power transmission wheel to an end of an output shaft of an internal combustion engine; and
   a ring disposed between the bolt and the rim;

   wherein the output shaft has a shoulder; and
   wherein the power transmission wheel is disposed between the shoulder and the ring such that the power transmission wheel is retained on the output shaft.

**10.** The power transmission wheel of claim 9, wherein an amount of friction between the ring and the rim can be adjusted by tightening or loosening the bolt; and
wherein relative movement of the rim with respect to the hub can be adjusted by the amount of friction.

**FIG. 1**

**FIG. 2**

**FIG. 3**

**FIG. 4**

EP 1 930 630 A1

**FIG. 5**

EP 1 930 630 A1

FIG. 6

**FIG. 7**

35A

FIG. 8

**FIG. 9**

*FIG. 10*

**FIG. 11**

**FIG. 12**

FIG. 13

*FIG. 14*

*FIG. 15*

*FIG. 16*

**FIG. 17**

EP 1 930 630 A1

**FIG. 18**

**European Patent Office**

**EUROPEAN SEARCH REPORT**

Application Number

EP 07 12 2566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/261093 A1 (SHIMIZU TAKASHI [JP] ET AL) 24 November 2005 (2005-11-24) * paragraphs [0048] - [0053]; figures 1,2 * | 1 | INV. F16H55/14 |
| X | EP 1 577 587 A (HALLA CLIMATE CONTROL CORP [KR]) 21 September 2005 (2005-09-21) * paragraphs [0065] - [0083]; figure 5 * | 1 | |
| X | DE 10 2005 029351 A1 (LUK LAMELLEN & KUPPLUNGSBAU [DE]) 26 January 2006 (2006-01-26) * paragraphs [0028] - [0034]; figures 1-4 * | 1 | |
| A | US 6 131 477 A (GAYDEK GERALD JOSEPH [US] ET AL) 17 October 2000 (2000-10-17) * the whole document * | 1-10 | |
| A | US 5 956 998 A (FENELON PAUL J [US]) 28 September 1999 (1999-09-28) * abstract * | 1-10 | TECHNICAL FIELDS SEARCHED (IPC) F16H |

The present search report has been drawn up for all claims

| Place of search | Date of completion of the search | Examiner |
|---|---|---|
| Munich | 8 April 2008 | Lord, Gareth |

EPO FORM 1503 03.82 (P04C01)

## ANNEX TO THE EUROPEAN SEARCH REPORT
## ON EUROPEAN PATENT APPLICATION NO.

EP 07 12 2566

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2008

| Patent document cited in search report | | Publication date | Patent family member(s) | | Publication date |
|---|---|---|---|---|---|
| US 2005261093 | A1 | 24-11-2005 | DE 102005022333 A1<br>JP 2005331082 A | | 16-03-2006<br>02-12-2005 |
| EP 1577587 | A | 21-09-2005 | CN 1670404 A<br>JP 4035832 B2<br>JP 2005265189 A<br>US 2005209009 A1 | | 21-09-2005<br>23-01-2008<br>29-09-2005<br>22-09-2005 |
| DE 102005029351 | A1 | 26-01-2006 | NONE | | |
| US 6131477 | A | 17-10-2000 | NONE | | |
| US 5956998 | A | 28-09-1999 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60868799 B